# EUROPÄISCHE PATENTSCHRIFT

(11) **EP 3 126 280 B1**
(45) Veröffentlichungstag und Bekanntmachung des Hinweises auf die Patenterteilung: **09.05.2018**
(21) Anmeldenummer: 15731488.1
(22) Anmeldetag: 18.03.2015
(51) Int. Cl.: B67D 7/00, B67D 7/42, F16K 1/12

(54) **BEFÜLLADAPTER MIT EINEM KOAXIALVENTIL**
FILLING ADAPTER HAVING A COAXIAL VALVE
ADAPTATEUR DE REMPLISSAGE COMPRENANT UNE SOUPAPE COAXIALE

(30) Priorität: 29.03.2014 DE 102014004828
(43) Veröffentlichungstag der Anmeldung: 08.02.2017
(73) Patentinhaber: Dürr Somac GmbH, 09366 Stollberg (DE)
(72) Erfinder: ACHATZ, Thomas, 09366 Niederdorf (DE); SELBMANN, Eric, 09355 Gersdorf (DE); WIELAND, Frank, 09235 Burkhardtsdorf (DE)
(74) Vertreter: Patentanwälte Findeisen & Neumann
(86) Internationale Anmeldenummer: PCT/DE2015/000139
(87) Internationale Veröffentlichungsnummer: WO 2015/149739

(56) Entgegenhaltungen:
- EP-A2- 1 235 012
- DE-A1-102006 062 716
- GB-A- 1 162 996
- US-A- 4 195 673

## Beschreibung

Die Erfindung betrifft einen Befülladapter für einen mit Medien (z.B. Öle, Gase, Kältemittel und dergleichen) zu befüllenden Behälter, insbesondere für eine Erstbefüllung von Behältern mit Betriebsstoffen an Montagelinien zur Herstellung von Kraftfahrzeugen, wobei der Befülladapter mit einem Schlauchpaket, elektrischen, pneumatischen und hydraulischen Leitungen ausgestattet ist.

Ein Befülladapter gemäß dem einleitenden Teil des Anspruchs 1 ist aus der DE 10 2006 062 716 A1 bekannt.

Für zahlreiche technische Anwendungen müssen Behälter mit Flüssigkeiten oder Gasen gefüllt werden. Ein diesbezüglich typisches Anwendungsgebiet sind Kraftfahrzeuge, für die eine Befüllung von Gehäusen, Kreisläufen, Ausgleichbehältern und dergleichen mit Kraft-, Schmier-, Kühl- und sonstigen Betriebsstoffen notwendig ist. Hierbei müssen die Fahrzeuge im Herstellungsprozess beispielsweise mit Bremsöl, Servoöl, Kühlflüssigkeit, Kältemittel, Wischwasser und Kraftstoff befüllt werden. Diese Medien werden mit Befüllanlagen über Schläuche und spezielle Adapter in die jeweiligen Kreisläufe der Fahrzeuge eingespeist. Dabei enthalten die Schläuche zumeist mehrere Leitungen mit unterschiedlichen Funktionen für Vakuumbeaufschlagung, Rücksaugen, Füllen, Belüften sowie auch elektrische Leitungen.

Für die Durchführung der Befüllung muss ein Werker in Abhängigkeit der jeweiligen Position der Befüllanlage den Adapter mit dem Schlauchpaket zum Fahrzeug bringen und dort am Anschluss der jeweils zu befüllenden Kreisläufe anschließen.

Die Befülladapter sind mit Ventilen zur Prozesssteuerung ausgestattet, um in den verschiedenen Prozessschritten Medienleitungen zu öffnen oder zu schließen. Hierfür werden bisher überwiegend sog. Gamma- bzw. Quetschventile, Sitzventile oder Koaxialventile eingesetzt. Dabei sind die letztgenannten Koaxialventile für einen Einsatz in Befülladaptern besonders gut geeignet, weil sie gegenüber anderen Bauarten insbesondere die folgenden vorteilhaften Eigenschaften aufweisen:
- geringe Baugröße bei gleichzeitig großem Querschnitt
- schmutzunempfindlich und langlebig
- schnelle Öffnungs- und Schließzeiten
- keine Druckdifferenz erforderlich
- gegendruckdicht und wechselseitig durchströmbar
- die zu schaltenden Drücke haben keinen Einfluss auf das Ventil und das Ventil kann somit nicht unbeabsichtigt aufgedrückt werden

Bei den bisher üblichen Koaxialventilen wird im geschlossenen Zustand das Steuerrohr von einem Kolben mittels Druckluft auf die Sitzdichtung gepresst. Dadurch wird das Steuerrohr durch diese Sitzdichtung verschlossen und das Medium wird gesperrt. Durch Umschalten der Druckluft in die andere Druckkammer des Kolbens wird das Steuerrohr von der Sitzdichtung wegbewegt, so dass nunmehr der Durchfluss freigegeben wird.

Trotz der oben benannten funktionellen Vorteile gegenüber anderen Ventilbauarten ergeben sich bei einer Verwendung der bisher bekannten Koaxialventile für Befülladapter auch Probleme. So muss die Medienleitung mehrfach um die Sitzdichtung umgelenkt werden, um die axiale Strömungsrichtung einzuhalten. Dies ist jedoch strömungstechnisch ungünstig. Durch diese notwendige Umlenkung wird das Ventil zwangsläufig größer und der Aufbau somit komplizierter und auch kostenintensiv.

Aufgabe der Erfindung ist es, ein Koaxialventil konstruktiv so zu verändern, dass bei einer Anwendung in einem Befülladapter bessere strömungstechnische Eigenschaften erzielt werden. Gleichzeitig sollen die Baugröße, die Herstellungskosten und das Bauteilgewicht reduziert werden.

Diese Aufgabe wird dadurch gelöst, dass der Befülladapter im Bereich seines Adapterkopfes mit einem Koaxialventil ausgestattet ist, das ausgehend vom Eintrittsquerschnitt zunächst eine parallel zur Ventillängsachse verlaufende Strömungskontur aufweist, die im weiteren Strömungsverlauf in eine rechtwinklig zur Ventillängsachse verlaufende Strömungskontur zum Austrittsquerschnitt übergeht.

Am Übergangsbereich der parallel zur Ventillängsachse verlaufenden Strömungskontur zu der rechtwinklig zur Ventillängsachse verlaufenden Strömungskontur ist eine kreiskegelförmige Prallfläche als Sitzdichtung für das Steuerrohr des Koaxialventils ausgestaltet. Die Kegelspitze dieser Prallfläche ist auf die Mittellängsachse der parallel zur Ventillängsachse verlaufenden Strömungskontur ausgerichtet. Gleichzeitig läuft diese Kreiskegelspitze in der Ebene aus, in der die Mittellängsachse der rechtwinklig zur Ventillängsachse verlaufenden Strömungskontur ausgestaltet ist.

Somit wird am Übergangsbereich der beiden rechtwinklig zueinander verlaufenden Strömungskonturen eine Umlenkung der Medienleitung um 90° mit gegenüber den bisherigen Konstruktionen strömungstechnisch besseren Eigenschaften erreicht. Dies beruht insbesondere darauf, dass nunmehr das jeweilige Medium im Koaxialventil nur noch ein einziges Mal umgelenkt wird, während bisher eine vierfache Umlenkung notwendig war. Außerdem bewirkt die kreiskegelförmige Prallfläche eine wirksame und dennoch sanfte Strömungsumleitung. Durch den Verzicht auf eine mehrfache Umlenkung verringern sich zwangsläufig Baugröße und Gewicht der gesamten Baugruppe, wodurch letztlich auch das Gewicht des zugeordneten Adapterkopfes reduziert wird. Dies verbessert die Handhabung des Befülladapters für den Werker. Schließlich können durch den jetzt einfacheren Aufbau des Koaxialventils auch die Herstellungskosten reduziert werden.

Ein Ausführungsbeispiel der Erfindung ist aus der Zeichnung ersichtlich. Hierbei sind lediglich die für die vorliegende Erfindung wesentlichen Elemente dargestellt.

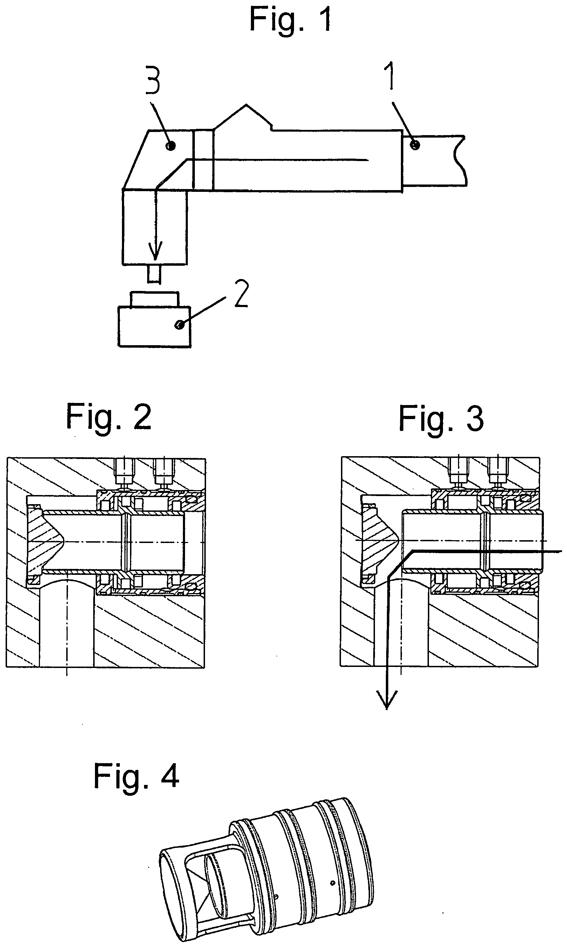

Fig. 1 zeigt den stilisierten Aufbau eines Befülladapters mit zugeordnetem Schlauchpaket 1 und einem zu befüllenden Fahrzeugbehälter 2, wobei ein erfindungsgemäß ausgeführtes Koaxialventil im Adapterkopf 3 angeordnet ist. Der Strömungsverlauf des Mediums ist mit einer Linie stilisiert, wobei die Strömungsrichtung in den zu befüllenden Behälter mit einem Pfeil gekennzeichnet ist.
Fig. 2 zeigt den grundsätzlichen Aufbau eines erfindungsgemäß ausgeführten Koaxialventils in Schnittdarstellung, hier bei geschlossenem Ventil.
Fig. 3 zeigt den grundsätzlichen Aufbau eines erfindungsgemäß ausgeführten Koaxialventils in Schnittdarstellung, hier bei geöffnetem Ventil. Der Strömungsverlauf des Mediums ist mit einer Linie stilisiert, wobei die Strömungsrichtung in den zu befüllenden Behälter mit einem Pfeil gekennzeichnet ist.
Fig. 4 zeigt den grundsätzlichen Aufbau eines erfindungsgemäß ausgeführten Koaxialventils in perspektivischer Darstellung.

## Patentansprüche

1. Befülladapter für einen mit Medien zu befüllenden Behälter, insbesondere für eine Erstbefüllung von Behältern mit Betriebsstoffen an Montagelinien zur Herstellung von Kraftfahrzeugen, wobei der Befülladapter mit einem Schlauchpaket, elektrischen, pneumatischen und hydraulischen Leitungen sowie im Bereich seines Adapterkopfes mit einem Koaxialventil ausgestattet ist, das ausgehend vom Eintrittsquerschnitt zunächst eine parallel zur Ventillängsachse verlaufende Strömungskontur aufweist, die im weiteren Strömungsverlauf in eine rechtwinklig zur Ventillängsachse verlaufende Strömungskontur zum Austrittsquerschnitt übergeht, **dadurch gekennzeichnet,**
**dass** am Übergangsbereich der parallel zur Ventillängsachse verlaufenden Strömungskontur zu der rechtwinklig zur Ventillängsachse verlaufenden Strömungskontur eine kreiskegelförmige Prallfläche als Sitzdichtung für das Steuerrohr des Koaxialventils ausgestaltet ist, wobei die Kreiskegelspitze dieser kreiskegelförmigen Prallfläche auf die Mittellängsachse der parallel zur Ventillängsachse verlaufenden Strömungskontur ausgerichtet ist und in der Ebene ausläuft, in der die Mittellängsachse der rechtwinklig zur Ventillängsachse verlaufenden Strömungskontur ausgestaltet ist.

## Claims

1. A filling adapter for a container to be filled with media, particularly for the initial filling of containers with operating fluids on assembly lines for manufacturing motor vehicles, wherein the filling adapter is equipped with a hose pack, electric, pneumatic, and hydraulic lines, and a coaxial valve in the region of its adapter head, whose coaxial valve has a flow contour starting from the inlet cross section and initially extending parallel to the valve longitudinal axis, whose contour transitions downstream into a flow contour extending at a right angle to the valve longitudinal axis towards the outlet cross section, **characterized in that**, in the transitional area from the flow contour extending parallel to the valve longitudinal axis to the flow contour extending at a right angle to the valve longitudinal axis, a circular cone-shaped baffle is configured as a seat gasket for the control tube of the coaxial valve, wherein the circular cone tip of the said circular cone-shaped baffle is aligned to the central longitudinal axis of the flow contour extending parallel to the valve longitudinal axis and tapers off in the plane in which the central longitudinal axis of the flow contour extending at a right angle to the valve longitudinal axis is configured.

## Revendications

1. Adaptateur de remplissage pour remplir un récipient de médiums, conçu en particulier pour le premier remplissage de récipients avec des carburants, tels qu'ils sont utilisés pour lignes de montage de l'industrie automobile, ledit adaptateur de remplissage étant équipé d'un set de flexibles, de lignes électriques et de conduites pneumatiques et hydrauliques ainsi que, au niveau de sa tête, d'une soupape coaxiale qui présente, dans un premier temps et à partir de la section d'entrée, un profil d'écoulement parallèle à l'axe longitudinal de la soupape, ce profil d'écoulement devenant, lors de l'avancement du flux vers la section de sortie, de plus en plus un profil d'écoulement perpendiculaire à l'axe longitudinal de la soupape, **caractérisé en ce**
**qu'**au niveau de la zone de transition du profil d'écoulement parallèle à l'axe longitudinal de la soupape vers le profil d'écoulement perpendiculaire à l'axe longitudinal de la soupape est prévue une surface d'impact en forme de cône circulaire qui, elle, est conçue en tant que joint de siège du tube de direction de la soupape axiale, et qu'avant de se terminer dans la zone dans laquelle est disposé l'axe longitudinal central du profil d'écoulement perpendiculaire à l'axe longitudinal de la soupape, la pointe du cône circulaire de ladite surface d'impact en forme de cône circulaire est orientée vers l'axe longitudinal central du profil d'écoulement parallèle à l'axe longitudinal de la soupape.
